# EUROPÄISCHE PATENTSCHRIFT

(11) **EP 3 542 883 B1**
(45) Veröffentlichungstag und Bekanntmachung des Hinweises auf die Patenterteilung: **05.07.2023**
(21) Anmeldenummer: 19154476.6
(22) Anmeldetag: 30.01.2019
(51) Int. Cl.: B01D 35/027

(54) **HYDRAULIKTANK UND VERFAHREN ZUR HERSTELLUNG**
HYDRAULIC TANK AND METHOD OF MANUFACTURING
RÉSERVOIR HYDRAULIQUE ET PROCÉDÉ DE FABRICATION

(30) Priorität: 20.03.2018 DE 102018106499
(43) Veröffentlichungstag der Anmeldung: 25.09.2019
(73) Patentinhaber: ARGO-HYTOS Group AG, 6340 Baar (CH)
(72) Erfinder: Weiser, Thomas, 74889 Sinsheim (DE); Trunner, Daniel, 76703 Kraichtal (DE); Schleuter, Tanja, 67105 Schifferstadt (DE); Stech, Jörg, 74906 Bad Rappenau (DE)
(74) Vertreter: Meissner Bolte Partnerschaft mbB

(56) Entgegenhaltungen:
- WO-A1-2010/122065
- CN-A- 102 414 042
- US-A- 5 782 223
- US-A1- 2016 023 145
- US-A1- 2017 122 170

## Beschreibung

Die Erfindung betrifft einen Hydrauliktank mit einem Tankgehäuse und wenigstens einem Einbauelement, das im Inneren des Tankgehäuses angeordnet ist. Die Erfindung betrifft ferner ein Verfahren zur Herstellung eines Hydrauliktanks.

Einen Hydrauliktank der eingangs genannten Art ist aus der Praxis bekannt. Bei bekannten Hydrauliktanks liegt das Einbauelement, beispielsweise ein Filtergehäuse, auf einem Widerlager im Inneren des Tankgehäuses auf. Radialkräfte zwischen dem Widerlager und dem Filtergehäuse werden nicht oder nur in geringem Maße übertragen. CN 102 414 042 A, US 2016/023145 A1, US 5 782 223 A und US 2017/122170 A1 sind beispielhafte Dokumente für den Stand der Technik.

Bei neueren Herstellungsverfahren des Tankgehäuses hat sich gezeigt, dass die Formstabilität des Tankgehäuses im Bereich des Einbauelements optimiert werden kann.

Der Erfindung liegt daher die Aufgabe zu Grunde, einen Hydrauliktank so zu verbessern, dass im Wesentlichen unabhängig vom jeweiligen Herstellungsverfahren des Hydrauliktanks ein möglichst formstabiles Tankgehäuse zumindest im Bereich des Einbauelements geschaffen wird. Der Erfindung liegt ferner die Aufgabe zu Grunde, ein Verfahren zum Herstellen eines Hydrauliktanks anzugeben.

Erfindungsgemäß wird diese Aufgabe durch einen Hydrauliktank mit den Merkmalen des Anspruchs 1 gelöst. Mit Blick auf das Verfahren wird die Aufgabe durch den Gegenstand des Anspruchs 7 gelöst.

Konkret wird die Aufgabe durch einen Hydrauliktank mit einem Tankgehäuse und wenigstens einem Einbauelement gelöst, das im Inneren des Tankgehäuses angeordnet ist. Das Tankgehäuse und das Einbauelement sind fest, insbesondere stoffschlüssig verbunden. Das Tankgehäuse und das Einbauelement weisen unterschiedliche Kriechfestigkeiten und/oder unterschiedliche E-Module auf. Die Kriechfestigkeit und/oder das E-Modul des Einbauelements ist höher als die Kriechfestigkeit bzw. das E-Modul des Tankgehäuses. Das Einbauelement stabilisiert das Tankgehäuse zumindest bereichsweise.

Konkret weist das Material des Einbauelements eine höhere Kriechfestigkeit und/oder ein höheres E-Modul als das Material des Tankgehäuses auf.

Die Erfindung hat den Vorteil, dass das Einbauelement eine Doppelfunktion erfüllt. Einerseits übernimmt das Einbauelement die ihm ursprünglich zugedachte Funktion im Tankgehäuse, beispielsweise bei einem Filtergehäuse die Aufnahme des Filterelements. Andererseits hat das Einbauelement eine zusätzliche Stabilisierungsfunktion, die dazu führt, dass das Tankgehäuse zumindest im Bereich des Einbauelements formstabil ist. Die Formstabilität des Tankgehäuses kommt besonders dann gut zum Tragen, wenn das Tankgehäuse durch ein Rotationsformverfahren, insbesondere durch Rotationsflüssigformen hergestellt wird.

Erfindungsgemäß ist das Einbauelement fest mit dem Tankgehäuse verbunden im Unterschied zu einer Verbindung, bei der das Einbauelement lose im Tankgehäuse angeordnet ist. Die feste Verbindung bewirkt, dass Kräfte, insbesondere Radialkräfte, die auf das Tankgehäuse wirken, abgeführt und Verformungen des Tankgehäuses zumindest weitgehend vermieden werden. Mit anderen Worten werden Relativbewegungen zwischen dem Einbauelement und dem Tankgehäuse zumindest in der direkten Umgebung des Einbauelements weitgehend unterbunden.

Dabei ist weiter vorgesehen, dass das Tankgehäuse und das Einbauelement unterschiedliche Kriechfestigkeiten und/oder unterschiedliche E-Module aufweisen. Das Einbauelement weist eine höhere Kriechfestigkeit und/oder ein höheres E-Modul als das Tankgehäuse auf und stabilisiert das Tankgehäuse zumindest bereichsweise.

Im Tankgehäuse, insbesondere im Bereich des Einbauelements kann es zu erhöhten Drücken kommen, die kurzzeitig oder auch langfristig auf das Tankgehäuse wirken. Für den Fall, dass langfristige Drücke auf das Tankgehäuse wirken, ist es sinnvoll, die Kriechfestigkeit des Einbauelements im Vergleich zum Tankgehäuse zur erhöhen. Bei kurzzeitigen Druckerhöhungen kann erfindungsgemäß ein höheres E-Modul des Einbauelements im Vergleich zum Tankgehäuse vorgesehen sein. Bei einer Kombination langfristig erhöhter Drücke und kurzzeitiger Druckspitzen können die Kriechfestigkeit und das E-Modul des Einbauelements höher als des Tankgehäuses sein.

Durch das höhere E-Modul bzw. die höhere Kriechfestigkeit wird der Widerstand des Einbauelements gegen Kräfte bzw. Drücke, die auf das Tankgehäuse wirken, verbessert, sodass das Tankgehäuse im Wesentlichen formstabil ist.

Bevorzugte Ausführungsformen der Erfindung sind Gegenstand der Unteransprüche.

Bei einer besonders bevorzugten Ausführungsform ist das Einbauelement aus einem verstärkten Material, insbesondere aus einem faserverstärkten Material gebildet. Demgegenüber kann das Material des Tankgehäuses unverstärkt, sodass unterschiedliche Kriechfestigkeiten und/oder E-Module vorliegen. Dabei kann das faserverstärkte Material des Einbauelements Glasfasern und/oder Kohlefasern aufweisen. Andere Hartstoffe zur Verstärkung des Materials des Einbauelements sind möglich.

Bei einer weiteren bevorzugten Ausführungsform sind das Tankgehäuse und das Einbauelement aus demselben Grundmaterial oder aus ähnlichen Grundmaterialien gebildet. Dies hat den Vorteil, dass eine stoffschlüssige Verbindung zwischen dem Tankgehäuse und dem Einbauelement erleichtert wird. Das Tankgehäuse und das Einbauelement können dann gut verschweißt werden. Mit anderen Worten sind die Matrix des Einbauelements, in der die Verstärkungsfasern eingebettet sind, und das Material des Tankgehäuses ähnlich oder identisch.

Das Tankgehäuse und das Einbauelement können jeweils aus Kunststoff gebildet sein.

Vorzugsweise umfasst das Einbauelement ein Filtergehäuse zur Aufnahme eines Filterelements. Diese Ausführung hat den Vorteil, dass ein an sich bekanntes Filtergehäuse eine Zusatzfunktion, beispielsweise durch eine entsprechende Materialwahl, erhält und das Tankgehäuse so stabilisiert.

Das Tankgehäuse kann eine Aufnahmeöffnung für das Einbauelement, insbesondere für das Filtergehäuse aufweisen, in der das Einbauelement angeordnet und mit dieser fest verbunden ist. Die feste Verbindung des Einbauelements mit der Aufnahmeöffnung des Tankgehäuses ermöglicht eine Kraftübertragung und stabilisiert das Tankgehäuse im Bereich der Aufnahmeöffnung.

Vorzugsweise weist die Aufnahmeöffnung ein Verbindungsprofil und das Einbauelement ein korrespondierendes Gegenprofil auf, das mit dem Verbindungsprofil fest verbunden ist. Diese Ausführungsform hat den Vorteil, dass die erfindungsgemäße Materialpaarung zur Verbesserung der Formstabilität durch eine geeignete Geometriewahl im Bereich der Aufnahmeöffnung bzw. des Einbauelements unterstützt wird.

Beispielsweise kann das Verbindungsprofil einen Verbindungsflansch aufweisen, der das Einbauelement auf dessen Außenumfang umgibt. Der Verbindungsflansch weist eine Schulter auf, die sich in radialer Richtung nach innen bezogen auf die Aufnahmeöffnung erstreckt. Durch die feste Verbindung des Einbauelements mit dem Tankgehäuse wird erreicht, dass der das Einbauelement umgebende Verbindungsflansch in radialer Richtung stabilisiert wird. Die Schulter des Verbindungsflansches ermöglicht eine formschlüssige Verbindung mit dem Einbauelement, wodurch die Formstabilität weiter verbessert wird.

Das Gegenprofil des Einbauelements kann einen Kragen aufweisen, der sich in radialer Richtung nach außen bezogen auf die Aufnahmeöffnung erstreckt. Im eingebauten Zustand ist der Kragen auf der Schulter des Verbindungsflansches des Tankgehäuses angeordnet und mit diesem fest verbunden. Die Schulter und der Kragen können beispielsweise verschweißt sein. Diese Anordnung hat den Vorteil, dass sich im Anschluss an den Kragen und die Schulter eine Erhöhung der Wandstärke des Tankgehäuses ergibt. Dabei liegen der Verbindungsflansch und das Einbauelement direkt aneinander an, was insgesamt eine Erhöhung der Wandstärke und somit eine Stabilisierung des Tankgehäuses bewirkt.

Im Rahmen der Erfindung wird ein Verfahren zum Herstellen eines Hydrauliktanks mit einem Tankgehäuse und einem Einbauelement, insbesondere einem Filtergehäuse zur Aufnahme eines Filterelements offenbart und beansprucht. Das Einbauelement wird im Inneren des Tankgehäuses angeordnet und mit diesem fest verbunden.

Bei dem erfindungsgemäßen Verfahren wird
a) das Tankgehäuse durch Rotationsflüssigformen hergestellt oder ein durch Rotationsflüssigformen hergestelltes Tankgehäuse bereitgestellt, wobei bei dem Rotationsflüssigformen wenigstens ein flüssiges Ausgangsmaterial in ein Rotationswerkzeug eingebracht wird, das Rotationswerkzeug zum Verteilen des flüssigen Ausgangsmaterials im Rotationswerkzeug bewegt wird und das Tankgehäuse nach dem Verfestigen des Ausgangsmaterials entformt wird,
b) das Einbauelement durch Spritzgießen hergestellt oder ein durch Spritzgießen hergestelltes Einbauelement bereitgestellt, und
c) das spritzgegossene Einbauelement und das rotationsflüssiggeformte Tankgehäuse fest verbunden,

Das Tankgehäuse und das Einbauelement weisen unterschiedliche Kriechfestigkeiten und/oder E-Module auf. Das Einbauelement weist eine höhere Kriechfestigkeit und/oder ein höheres E-Modul als das Tankgehäuse auf und stabilisiert das Tankgehäuse zumindest bereichsweise.

Bei dem Rotationsflüssigformen können mehrere flüssige Einzelkomponenten des Ausgangsmaterials bzw. mehrere flüssige Ausgangsmaterialien außerhalb des Rotationswerkzeuges gemischt und dann als Reaktionsgemisch in das Rotationswerkzeug eingebracht werden. Die Reaktion bzw. Polymerisation findet im Rotationswerkzeug statt. Alternativ ist es denkbar, mehrere flüssige Ausgangsmaterialien gesondert in das Rotationswerkzeug einzubringen und im Rotationswerkzeug zu einem Reaktionsgemisch zu mischen.

Bspw. kann ein flüssiges Reaktionsgemisch in ein vorgewärmtes Rotationswerkzeug eingebracht werden, das als Ausgangsmaterial eine Vorläuferverbindung aus wenigstens einem Aktivator und einem Katalysator enthält. Unmittelbar vor dem Einbringen des Gemisches in das vorgewärmte Rotationswerkzeug werden die Komponenten vermischt.

Das Rotationsflüssigformen führt zu Materialoberflächen mit einer hohen Güte, insbesondere zu glatten Materialoberflächen. Dieser Vorteil kommt besonders beim Verbinden des Tankgehäuses mit dem Einbauelement zum Tragen. Die Verbindungsfläche des Tankgehäuses, an der das Einbauelement im montierten Zustand anliegt, muss auf Grund der hohen Oberflächengüte nicht gesondert bearbeitet werden. Vielmehr kann das Einbauelement direkt nach der Herstellung des Tankgehäuses durch Rotationsflüssigformen mit dem Tankgehäuse verbunden, bspw. verschweißt werden.

Dasselbe gilt für Dichtflächen, die ohne mechanische Bearbeitung unmittelbar genutzt werden können.

Die für das Rotationsflüssigformen erforderlichen Rotationswerkzeuge sind relativ kostengünstig. Damit sinken die Herstellungskosten und kleine Stückzahlen sind möglich.

Die Herstellung des Einbauelements erfolgt durch ein anderes Verfahren, nämlich durch Spritzgießen. Dadurch können Bauteile mit komplizierten Geometrien präzise realisiert werden. Die Herstellung des Einbauelements durch Spritzgießen hat den weiteren Vorteil, dass das Einbauelement als produktübergreifendes Bauelement konzipiert und so in größeren Stückzahlen produziert werden.

Die Erfindung hat ferner den Vorteil, dass eine einteilige Herstellung eines geschlossenen Tankgehäuses durch das Rotationsflüssigformen möglich ist. Im Unterschied zu anderen Prozessen fehlen bei einem rotationsflüssiggeformten Tankgehäuse Quetsch- oder Schweißnähte, die nachbearbeitet werden müssen. Das Tankgehäuse wird in einem Stück ohne Schweißnähte oder Verbindungen nahezu spannungsfrei hergestellt.

Die Erstarrungstemperatur des Materials ist beim Rotationsflüssigformen kleiner als dessen Schmelztemperatur. Dadurch werden Schwund und Verzug des Hydrauliktanks minimiert. Beim Rotationsflüssigformen werden bei atmosphärischem Druck nahezu spannungsfreie Tankgehäuse produziert, da die Flüssigkeit, während des Formungsprozesses und beim Aushärten praktisch keine Spannungen erfährt. Die Wandstärke des Tankgehäuses kann bei Bedarf ohne eine Änderung des Werkzeugs durch eine Anpassung der Prozessparameter und Menge des Ausgangsmaterials verändert werden.

Eine geeignete Prozeßtemperatur bspw. für die Verarbeitung von PA 6 kann durch Vortemperieren des Rotationswerkzeuges auf ca. 160° und durch Bewegen des Rotationswerkzeuges in einem Ofen mit ca. 200°-205° eingestellt werden. Die Abkühlung erfolgt auf ca. 70°.

Wie in DE 10 2014 106 998 A1 näher beschrieben, werden Thermoplaste mit hoher Schmelz- bzw. Erweichungstemperatur beim Rotationsflüssigformen so verarbeitet, dass ein chemischer Vorläufer des für das Tankgehäuse vorgesehenen Materials, der sogenannte Kunststoffvorläufer, als Schmelze in flüssiger Form in das Rotationswerkzeug eingebracht wird und dort unter Rotation bei gleichzeitiger Formgebung chemisch zum endgültigen Kunststoffwerkstoff polymerisiert.

Dieses Verfahren kommt z.B. zur Herstellung von Tankgehäusen aus Polyamid 6 (PA6), Polyamid 12 (PA12) oder ihren Co-Polymeren zum Einsatz. Als Kunststoffvorläufer werden die entsprechenden Lactame, also z.B. Caprolactam und/oder Laurinlactam, eingesetzt, die bei Raumtemperatur unter Normalbedingungen in fester Form vorliegen, beim Rotationsflüssigformen jedoch als Schmelze mit sehr niedriger Viskosität verarbeitet werden. Die Prozesstemperatur wird unterhalb der Schmelztemperatur des fertigen Kunststoffs gehalten. Dieses Verfahren kann bei dem kombinierten Flüssigform- und Spritzgussverfahren im Rahmen der Erfindung mit Blick auf das Rotationsflüssigformen verwendet werden. Andere Rotationsflüssigformverfahren sind im Rahmen der Erfindung möglich.

Das hergestellte Tankgehäuse besteht aus einem Kunststoffmaterial, das erst während der Formgebung im Rotationswerkzeug aus einem Kunststoffvorläufer gebildet wird, der im Rotationswerkzeug zunächst in flüssiger Form vorliegt.

Die Erfindung unterscheidet sich von der nachveröffentlichten Anmeldung Nummer PCT/EP2016/072611 dadurch, dass das Einbauelement und das Tankgehäuse unterschiedliche Kriechfestigkeiten und/oder E-Module aufweisen.

Die Erfindung wird nachstehend anhand eines Ausführungsbeispiels unter Bezug auf die beigefügten schematischen Zeichnungen mit weiteren Einzelheiten näher erläutert.

In diesen zeigen
- Fig. 1: einen Schnitt durch ein Tankgehäuse eines Hydrauliktanks nach einem erfindungsgemäßen Ausführungsbeispiel im Bereich eines Filterkopfes; und
- Fig. 2: eine Detailansicht des Tankgehäuses nach Fig. 1 im Bereich des Filtergehäuses.

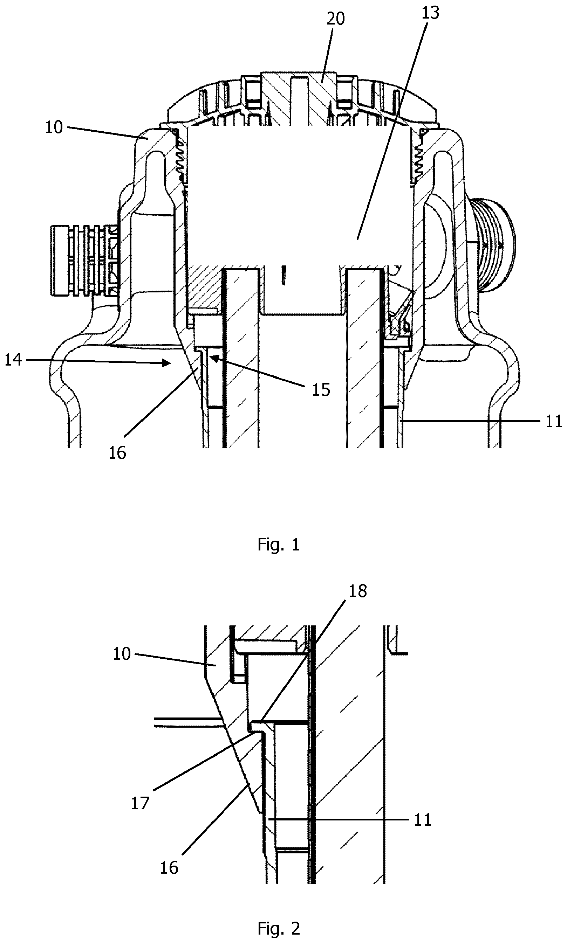

Der in Fig. 1 ausschnittweise dargestellte Hydrauliktank ist durch eine Kombination der beiden Fertigungstechnologien Rotationsformen, insbesondere Rotationsflüssigformen und Spritzguss hergestellt. Der Hydrauliktank ist für Mineralöl und umweltschonende Hydraulikflüssigkeiten geeignet. Der Hydrauliktank weist ein Tankgehäuse 10 auf, das durch Rotationsflüssigformen hergestellt ist. Im Inneren des Tankgehäuses 10 ist ein Einbauelement 11 angeordnet. Das Einbauelement 11 ist bei dem Ausführungsbeispiel als Filtergehäuse ausgeführt. Das Filtergehäuse nimmt ihn an sich bekannter Weise ein Filterelement auf und ist mit einem Filterkopf 20 fluidverbunden. Die Verbindung zwischen dem Filtergehäuse und dem Filterkopf 20 ist an sich bekannt und in Fig. 1 nicht näher dargestellt.

Die Erfindung ist nicht auf Filtergehäuse als Einbauelement eingeschränkt. Andere Einbauelemente sind möglich, die sich im Inneren des Tankgehäuses 10 befinden und in der nachstehend näher bezeichneten Weise das Tankgehäuse 10 stabilisieren.

Das Tankgehäuse 10 und das Einbauelement 11 sind fest verbunden. Konkret sind das Tankgehäuse 10 das Einbauelement 11 stoffschlüssig verbunden, insbesondere verschweißt. Die feste Verbindung des Tankgehäuses 10 und des Einbauelements 11 ermöglicht die Übertragung von radialen Kräften und axialen Kräften im Bereich des Einbauelements 11. Mit anderen Worten ist die feste Verbindung so ausgestaltet, dass eine Relativbewegung zwischen dem Tankgehäuse 10 und dem Einbauelement 11 zumindest weitgehend, insbesondere vollständig unterbunden wird.

Das Tankgehäuse 10 und das Einbauelement 11 weisen unterschiedliche Kriechfestigkeiten und/oder unterschiedliche E-Module auf. Die unterschiedlichen Materialeigenschaften können beispielsweise durch eine Verstärkung des Einbauelements 11 erreicht werden. So ist es möglich, dass das Einbauelement 11 aus einem faserverstärkten Material, insbesondere aus faserverstärktem Kunststoff hergestellt ist. Andere Verstärkungsmöglichkeiten auf der Materialebene sind denkbar. Das Material des Einbauelements 11 kann durch Glasfasern oder durch Kohlefasern verstärkt sein. Das Grundmaterial des Einbauelements 11 ist Kunststoff, beispielsweise Polyamid 6. Andere Grundstoffe sind möglich.

Das Material des Tankgehäuses 10 ist unverstärkt.

Das Material des Tankgehäuses 10 entspricht bei dem Ausführungsbeispiel gemäß Fig. 1 dem Grundmaterial des Einbauelements 11. Durch die Materialkompatibilität wird das Verbindungsverfahren zwischen dem Tankgehäuse 10 und dem Einbauelement 11 erleichtert. Dies gilt insbesondere für stoffschlüssige Verbindungsverfahren.

Die absolute Kriechfestigkeit des Tankgehäuses bzw. des Einbauelements steht nicht im Vordergrund. Es geht vielmehr darum, dass das Einbauelement eine höhere Kriechfestigkeit als das Tankgehäuse aufweist, so dass ein Stabilisierungseffekt eintritt. Bei höheren Druckbelastungen im Tankgehäuse wird der Unterschied in der Kriechfestigkeit höher eingestellt als bei niedrigeren Druckverhältnissen. Die Kriechfestigkeit des Einbauelements kann beispielsweise durch den Grad der Materialverstärkung des Einbauelements 11 beeinflusst werden. Dies kann in an sich bekannter Weise durch Einstellung der Fasermenge und Faserformen im Grundmaterial des Einbauelements 11 erreicht werden.

Dasselbe gilt für das E-Modul des Einbauelements 11.

Für die Bestimmung der Kriechfestigkeit ist das Zeitstandverhalten des Einbauelements 11 bzw. Tankgehäuses 10 ausschlaggebend. Die Kriechfestigkeit wird durch das Relaxationsmodul gekennzeichnet, dass das Verhältnis der zeitabhängigen Spannung zur konstanten Dehnung erfasst.

Konkret wird auf den Relaxationsversuch nach DIN 53 441 und Zeitstand-Zugversuch nach DIN 53 444 verwiesen. Zur Bestimmung des Elastizitätsmoduls wird auf DIN 53 457 verwiesen.

Zusätzlich zur Stabilisierung des Tankgehäuses durch die Materialeigenschaften des Einbauelements 11 erfolgt eine Stabilisierung durch die Einbaulage des Einbauelements 11 im Tankgehäuse 10. Wie in Fig. 1 zu erkennen, ist das Einbauelement 11 in einer Aufnahmeöffnung 13 des Tankgehäuses 10 fest angeordnet.

Die Aufnahmeöffnung 13 weist ein Verbindungsprofil 14 auf, dass mit einem korrespondierenden Gegenprofil 15 des Einbauelements 11 fest verbunden ist. Konkret weist das Verbindungsprofil 14 einen Verbindungsflansch 16 auf, der auf dem Außenumfang des Einbauelements 11 angeordnet ist und dieses hülsenförmig umgibt. Der hülsenförmige Verbindungsflansch 16 ist konzentrisch mit dem Einbauelement 11, konkret mit dem Filtergehäuse angeordnet. Die Außenwand des Einbauelements 11 liegt bündig am Verbindungsflansch 16 an.

Die Innenfläche des Verbindungsflansches 16 ist zylindrisch ausgebildet. Die Außenfläche des Verbindungsflansches 16 kann beispielsweise, wie in Fig. 2 gezeigt, konisch ausgebildet sein. Der Verbindungsflansch 16 verjüngt sich in Richtung des Bodens des Hydrauliktanks (nicht dargestellt).

Auf der Innenseite des Verbindungsflansches 16 ist eine Schulter 17 ausgebildet, die sich in radialer Richtung nach innen bezogen auf die Aufnahmeöffnung 13 erstreckt. Mit anderen Worten verläuft die Schulter 17 senkrecht zur Längsachse des Filtergehäuses und bildet so eine Auflagefläche für das Einbauelement 11.

Das Gegenprofil 15 des Einbauelements 11 weist einen Kragen 18 auf, der sich in radialer Richtung nach außen bezogen auf die Aufnahmeöffnung 13 erstreckt. Der Kragen 18 bildet einen ringförmigen Flansch, der auf der Schulter 17 des Verbindungsflansches 16 angeordnet ist, wie in Fig. 2 gut zu erkennen. Die Schulter 17 und der Kragen 18 sind formschlüssig angeordnet. Die Wandung des Einbauelements 11 und das Tankgehäuse 10 im Bereich des Verbindungsflansches 16 verlaufen parallel, sodass sich im Bereich des Verbindungsflansches 16 eine Erhöhung der Wandstärke des Tankgehäuses 10 aus der Kombination der Wandstärke des Einbauelements 11 und der Wandstärke des Verbindungsflansches 16 ergibt. Die stabilisierend wirkende Erhöhung der Wandstärke ergibt sich daraus, dass das Einbauelement 11 und das Tankgehäuse 10 fest, insbesondere stoffschlüssig miteinander verbunden sind. Dazu sind die Schulter 17 und der Kragen 18 bspw. miteinander verschweißt.

Die stoffschlüssige Verbindung zwischen dem Kragen 18 und der Schulter 17 kann durch Laserschweißen, Reibschweißen, Vibrationsschweißen oder Ultraschallschweißen erreicht werden.

### Bezugszeichenliste

- 10: Tankgehäuse
- 11: Einbauelement
- 12: frei
- 13: Aufnahmeöffnung
- 14: Verbindungsprofil
- 15: Gegenprofil
- 16: Verbindungsflansch
- 17: Schulter
- 18: Kragen
- 19: frei
- 20: Filterkopf

## Patentansprüche

1. Hydrauliktank mit einem Tankgehäuse (10) und wenigstens einem Einbauelement (11), das im Inneren des Tankgehäuses (10) angeordnet ist, wobei das Tankgehäuse (10) und das Einbauelement (11) fest verbunden sind und unterschiedliche Kriechfestigkeiten und/oder E-Module aufweisen, wobei das Einbauelement (11) eine höhere Kriechfestigkeit und/oder ein höheres E-Modul als das Tankgehäuse (10) aufweist und das Tankgehäuse (10) zumindest bereichsweise stabilisiert,
**dadurch gekennzeichnet, dass**
das Tankgehäuse (10) eine Aufnahmeöffnung (13) für das Einbauelement (11) aufweist, in der das Einbauelement (11) angeordnet und mit dieser fest verbunden ist, wobei die Aufnahmeöffnung (13) ein Verbindungsprofil (14) und das Einbauelement (11) ein korrespondierendes Gegenprofil (15) aufweisen, das mit dem Verbindungsprofil (14) fest verbunden ist, und wobei das Verbindungsprofil (14) einen Verbindungsflansch (16) aufweist, der das Einbauelement (11) auf dessen Außenumfang umgibt und eine Schulter (17) aufweist, die sich in radialer Richtung nach Innen bezogen auf die Aufnahmeöffnung (13) erstreckt, und das Gegenprofil (15) einen Kragen (18) aufweist, der sich in radialer Richtung nach Außen bezogen auf die Aufnahmeöffnung (13) erstreckt.

2. Hydrauliktank nach Anspruch 1
**dadurch gekennzeichne**t, dass
das Einbauelement (11) ein Filtergehäuse zur Aufnahme eines Filterelements umfasst.

3. Hydrauliktank nach Anspruch 1 oder 2
**dadurch gekennzeichnet, dass**
die Schulter (17) und der Kragen (18) fest verbunden, insbesondere verschweißt sind.

4. Hydrauliktank nach einem der vorhergehenden Ansprüche
**dadurch gekennzeichnet, dass**
das Einbauelement (11) aus einem verstärkten Material, insbesondere aus einem faserverstärkten Material gebildet ist.

5. Hydrauliktank nach Anspruch 4
**dadurch gekennzeichnet, dass**
das faserverstärkte Material des Einbauelements (11) Glasfasern und/oder Kohlefasern aufweist.

6. Hydrauliktank nach Anspruch 4 oder 5
**dadurch gekennzeichnet, dass**
das Tankgehäuse (10) und das Einbauelement (11) aus demselben Grundmaterial, insbesondere aus Kunststoff, gebildet sind.

7. Verfahren zum Herstellen eines Hydrauliktanks mit einem Tankgehäuse (10) und einem Einbauelement (11) nach einem der vorhergehenden Ansprüche, insbesondere einem Filtergehäuse zur Aufnahme eines Filterelementes (12), wobei das Einbauelement (11) im Inneren des Tankgehäuses (10) angeordnet und mit diesem fest verbunden wird, wobei
a) das Tankgehäuse (10) durch Rotationsflüssigformen hergestellt oder ein durch Rotationsflüssigformen hergestelltes Tankgehäuse (10) bereitgestellt wird, wobei bei dem Rotationsflüssigformen wenigstens ein flüssiges Ausgangsmaterial in ein Rotationswerkzeug eingebracht wird, das Rotationswerkzeug zum Verteilen des flüssigen Ausgangsmaterials im Rotationswerkzeug bewegt wird und das Tankgehäuse (10) nach dem Verfestigen des Ausgangsmaterials entformt wird,
b) das Einbauelement (11) durch Spritzgießen hergestellt oder ein durch Spritzgießen hergestelltes Einbauelement (11) bereitgestellt wird, und
c) das spritzgegossene Einbauelement (11) und das rotationsflüssiggeformte Tankgehäuse (10) fest verbunden werden,
wobei das Tankgehäuse (10) und das Einbauelement (11) unterschiedliche Kriechfestigkeiten und/oder E-Module aufweisen, wobei das Einbauelement (11) eine höhere Kriechfestigkeit und/oder ein höheres E-Modul als das Tankgehäuse (10) aufweist und das Tankgehäuse (10) zumindest bereichsweise stabilisiert.

## Claims

1. A hydraulic tank with a tank housing (10) and at least one installation element (11) that is arranged in the interior of the tank housing (10), wherein the tank housing (10) and the installation element (11) are rigidly connected and have different creep resistances and/or moduli of elasticity, wherein the installation element (11) has a higher creep resistance and/or a higher modulus of elasticity than the tank housing (10) and stabilizes the tank housing (10) at least in certain areas,
**characterized in that**
the tank housing (10) has a receptacle opening (13) for the installation element (11), in which the installation element (11) is arranged and rigidly connected thereto, wherein the receptacle opening (13) has a connecting profile (14) and the installation element (11) has a corresponding counter profile (15), which is rigidly connected to the connecting profile (14), and wherein the connecting profile (14) has a connecting flange (16), which surrounds the installation element (11) on its outer circumference and has a shoulder (17) extending radially inward referred to the receptacle opening (13), and the counter profile (15) has a collar (18) extending radially outward referred to the receptacle opening (13) .

2. The hydraulic tank according to claim 1,
**characterized in that**
the installation element (11) comprises a filter housing for accommodating a filter element.

3. The hydraulic tank according to claim 1 or 2,
**characterized in that**
the shoulder (17) and the collar (18) are rigidly connected, particularly welded to one another.

4. The hydraulic tank according to one of the preceding claims,
**characterized in that**
the installation element (11) is made of a reinforced material, particularly of a fiber-reinforced material.

5. The hydraulic tank according to claim 4,
**characterized in that**
the fiber-reinforced material of the installation element (11) contains glass fibers and/or carbon fibers.

6. The hydraulic tank according to claim 4 or 5,
**characterized in that**
the tank housing (10) and the installation element (11) are made of the same base material, particularly of plastic.

7. A method for manufacturing a hydraulic tank with a tank housing (10) and an installation element (11) according to one of the preceding claims, particularly a filter housing for accommodating a filter element (12), wherein the installation element (11) is arranged in the interior of the tank housing (10) and rigidly connected thereto, wherein
a) the tank housing (10) is manufactured by means of liquid rotational moulding or a tank housing (10) manufactured by means of liquid rotational moulding is made available, wherein at least one liquid starting material is introduced into a rotary tool during the liquid rotational moulding process, the rotary tool is moved in order to distribute the liquid starting material in the rotary tool and the tank housing (10) is demoulded after curing of the starting material,
b) the installation element (11) is manufactured by means of injection moulding or an installation element (11) manufactured by means of injection moulding is made available, and
c) the installation element (11) manufactured by means of injection moulding and the tank housing (10) manufactured by means of liquid rotational moulding are rigidly connected,
wherein the tank housing (10) and the installation element (11) have different creep resistances and/or moduli of elasticity, wherein the installation element (11) has a higher creep resistance and/or a higher modulus of elasticity than the tank housing (10) and stabilizes the tank housing (10) at least in certain areas.

## Revendications

1. Réservoir hydraulique, pourvu d'un carter de réservoir (10) et d'au moins un élément intégré (11), qui est placé à l'intérieur du carter de réservoir (10), le carter de réservoir (10) et l'élément intégré (11) étant fixement assemblés et faisant preuve de différent(e)s résistances au fluage et / ou modules d'élasticité, l'élément intégré (11) faisant preuve d'une résistance au fluage supérieure et / ou d'un module d'élasticité supérieur à celle/celui du carter de réservoir (10) et stabilisant au moins par endroits le carter de réservoir (10),
**caractérisé en ce que**
le carter de réservoir (10) comporte un orifice de logement (13) pour l'élément intégré (11) dans lequel l'élément intégré (11) est placé et est fixement assemblé avec celui-ci, l'orifice de logement (13) comportant un profilé d'assemblage (14) et l'élément intégré (11) comportant un profilé antagoniste (15) correspondant, qui est fixement assemblé avec le profilé d'assemblage (14), et le profilé d'assemblage (14) comportant une bride d'assemblage (16) qui entoure l'élément intégré (11) sur sa périphérie et qui comporte un épaulement (17), qui s'étend dans la direction radiale vers l'intérieur, en rapport à l'orifice de logement (13), et le profilé antagoniste (15) comportant une collerette (18), qui s'étend dans la direction radiale vers l'extérieur, en rapport à l'orifice de logement (13).

2. Réservoir hydraulique selon la revendication 1,
**caractérisé en ce que**
l'élément intégré (11) comprend un corps de filtre, destiné à recevoir un élément filtrant.

3. Réservoir hydraulique selon la revendication 1 ou 2,
**caractérisé en ce que**
l'épaulement (17) et la collerette (18) sont fixement assemblés, notamment soudés l'un à l'autre.

4. Réservoir hydraulique selon l'une quelconque des revendications précédentes, **caractérisé en ce que** l'élément intégré (11) est constitué d'une matière renforcée, notamment d'une matière renforcée par fibres.

5. Réservoir hydraulique selon la revendication 4,
**caractérisé en ce que**
la matière renforcée par fibres de l'élément intégré (11) comporte des fibres de verre et / ou des fibres de carbone.

6. Réservoir hydraulique selon la revendication 4 ou 5,
**caractérisé en ce que**
le carter de réservoir (10) et l'élément intégré (11) sont constitués de la même matière de base, notamment d'une matière plastique.

7. Procédé, destiné à fabriquer un réservoir hydraulique pourvu d'un carter de réservoir (10) et d'un élément intégré (11) selon l'une quelconque des revendications précédentes, notamment d'un corps de filtre destiné à recevoir un élément filtrant (12), l'élément intégré (11) étant placé à l'intérieur du carter de réservoir (10) et étant fixement assemblé avec celui-ci
a) le carter de réservoir (10) étant fabriqué par rotomoulage liquide ou un carter de réservoir (10) fabriqué par rotomoulage liquide étant mis à disposition, lors du rotomoulage liquide, au moins une matière de départ liquide étant introduite dans un outil rotatif, pour distribuer la matière de départ liquide dans l'outil rotatif, l'outil rotatif étant déplacé et après la solidification de la matière de départ, le carter de réservoir (10) étant démoulé,
b) l'élément intégré (11) étant fabriqué par moulage par injection ou un élément intégré (11) fabriqué par moulage par injection étant mis à disposition, et
c) l'élément intégré (11) moulé par injection et le carter de réservoir (10) fabriqué par rotomoulage liquide étant fixement assemblés,
le carter de réservoir (10) et l'élément intégré (11) faisant preuve de différent(e)s résistances au fluage et/ou modules d'élasticité, l'élément intégré (11) faisant preuve d'une résistance au fluage supérieure et/ou d'un module d'élasticité supérieur à celle/celui du carter de réservoir (10) et stabilisant au moins par endroits le carter de réservoir (10).
